# EUROPEAN PATENT APPLICATION

(11) **EP 1 717 920 A1**
(43) Date of publication of application: **02.11.2006**
(21) Application number: 06006705.5
(22) Date of filing: 30.03.2006
(51) Int. Cl.: H02B 1/052

(54) **Device for supporting electrical components and wiring accessories**

(30) Priority: 20.04.2005 IT MI20050709
(71) Applicant: COEPTE RAIL S.R.L., 20090 Buccinasco MI (IT)
(72) Inventor: Bré, Romano, 27010 Siziano (Prov. of Pavia) (IT); Bossi, Daniele, 20090 Buccinasco (Prov. of Milano) (IT)
(74) Representative: Alagem Modiano, Lara S.

(57) **Abstract**

A device for supporting electrical components and wiring accessories comprises a body, composed of at least one longitudinally elongated section (2a, 3a, 2b, 2c, 2d), fixable to a supporting element and forming a coupling region (4a, 4b, 4c, 4d) for electrical components (5, 6, 7). The body is provided with at least one lateral extension (8a, 9a, 8b, 9b, 8c, 9c, 8d, 9d), which protrudes laterally with respect to the coupling region and is adapted to support wiring accessories (10a, 10b, 10c, 11a, 11b, 11c), such as for example straps (11c) for supporting the cables to be connected to the electrical components and/or conduits for containing the cables to be connected to the electrical components and/or marking tags (27c) and/or L-shaped supports for connectors (29d) to be connected to the electrical components.

## Description

The present invention relates to a highly practical device for supporting electrical components and wiring accessories.

As is known, in the production of electrical systems, many components, such as terminal strips, switches, residual-current devices or other electrical devices, are grouped within appropriately provided cabinets or boxes to be fixed to walls or to be built into such walls. These components are usually supported by using generally metallic sections, which are fixed to a wall of the box or cabinet, or more generally to a supporting element, and to which the various electrical components are fastened adjacent to each other, said components being provided with a portion which is shaped appropriately in order to be fastened rapidly to the section.

In the wiring of the electrical components connected to supporting sections, one of the greatest problems is constituted by the tidy grouping and support of the electrical cables proximate to the components connected to the sections. These operations, by being generally performed after the various cables have been connected to the electrical components supported by the sections and by using elements which are generally connected to the wall that supports the section for supporting the various electrical components, require relatively long times and can be complicated to perform, particularly if the section that supports the electrical components is in places which are difficult to reach or awkward or if limited maneuvering spaces are available.

The aim of the present invention is to solve the problems described above by providing a device for supporting electrical components and wiring accessories which significantly facilitates the wiring operations, making them faster and easier to perform.

Within this aim, an object of the invention is to provide a device which also allows to perform pre-wiring on a bench of the various electrical components that it supports.

Another object of the invention is to provide a device which allows tidy and efficient grouping of the electrical cables to be connected to the electrical components supported by the device.

Another object of the invention is to provide a device which is structurally simple and can be manufactured at competitive costs.

This aim and these and other objects, which will become better apparent hereinafter, are achieved by a device for supporting electrical components and wiring accessories, comprising a body, composed of at least one longitudinally elongated section, which can be fixed to a supporting element and forms a coupling region for electrical components, characterized in that said body is provided with at least one lateral extension, which protrudes laterally with respect to said coupling region and is adapted to support wiring accessories.

Further characteristics and advantages of the invention will become better apparent from the description of some preferred but not exclusive embodiments of the device according to the invention, illustrated by way of non-limiting example in the accompanying drawings, wherein:
Figure 1 is a perspective view of a portion of a device according to the invention in a first embodiment, with an electrical component and some wiring accessories fitted thereon;
Figure 2 is a perspective view of a portion of a device according to the invention in a second embodiment, with some wiring accessories fitted thereon;
Figure 3 is a perspective view of a portion of a device according to the invention in a third embodiment, with some wiring accessories fitted thereon;
Figure 4 is a perspective view of a portion of a device according to the invention in a fourth embodiment, with an electrical component and a wiring accessory fitted thereon;
Figure 5 is a perspective view of a portion of a device according to the invention in the fourth embodiment, with an electrical component and another wiring accessory fitted thereon.

With reference to the figures, the device according to the invention, generally designated in its various embodiments by the reference numerals 1a, 1b, 1c, 1d, comprises a body which is composed of at least one section 2a, 3a, 2b, 2c, 2d which is longitudinally elongated and is constituted preferably by an extruded section and forms a coupling region 4a, 4b, 4c, 4d for electrical components 5, 6, 7.

According to the invention, the body of the device has at least one lateral extension 8a, 9a, 8b, 9b, 8c, 9c, 8d, 9d which protrudes laterally with respect to the coupling region 4a, 4b, 4c, 4d and is adapted to support wiring accessories 10a, 10b, 10c, 11c, 10d, 11d.

Preferably, as shown in the various embodiments, there are two lateral extensions 8a, 9a, 8b, 9b, 8c, 9c, 8d, 9d, which protrude on mutually opposite sides with respect to the coupling region 4a, 4b, 4c, 4d.

The two lateral extensions 8a, 9a, 8b, 9b, 8c, 9c, 8d, 9d are preferably symmetrical with respect to a longitudinal central plane of the section 3a, 2b, 2c, 2d.

In the various embodiments, the coupling region 4a, 4b, 4c, 4d is formed by a back wall 20a, 20b, 20c, 20d, by two side walls 21a, 22a, 21b, 22b, 21 c, 22c, 21d, 22d, which protrude, preferably at right angles, from the back wall 20a, 20b, 20c, 20d and face each other, and by wings 23a, 23b, 23c, 23d, which protrude, preferably at right angles, from the side walls and can be engaged by the electrical components 5, 6, 7 to be supported.

The coupling region 4a, 4b, 4c, 4d formed by the back wall, by the side walls and by said wings may have, as a whole, in transverse cross-section, a known type of configuration, for example an Ω-shaped one (i.e., of the type which can be engaged by fastening portions of electrical components to be arranged astride the two mutually opposite side walls of the coupling region of the section), or a C-shaped one (i.e., of the type which can be fastened by fastening portions of electrical components to be inserted between the two mutually opposite side walls of the coupling region of the section.

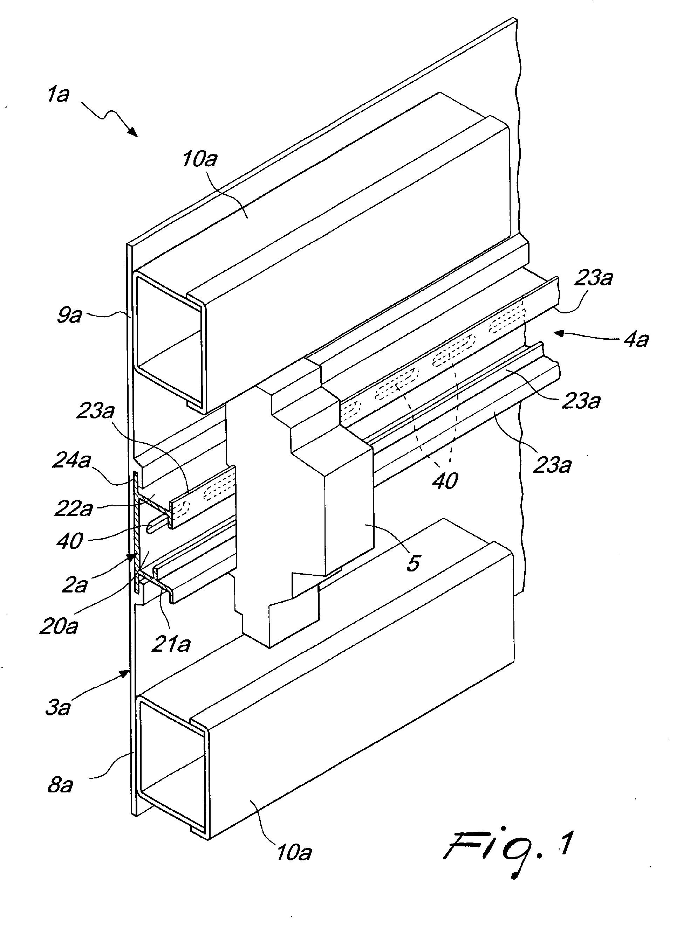

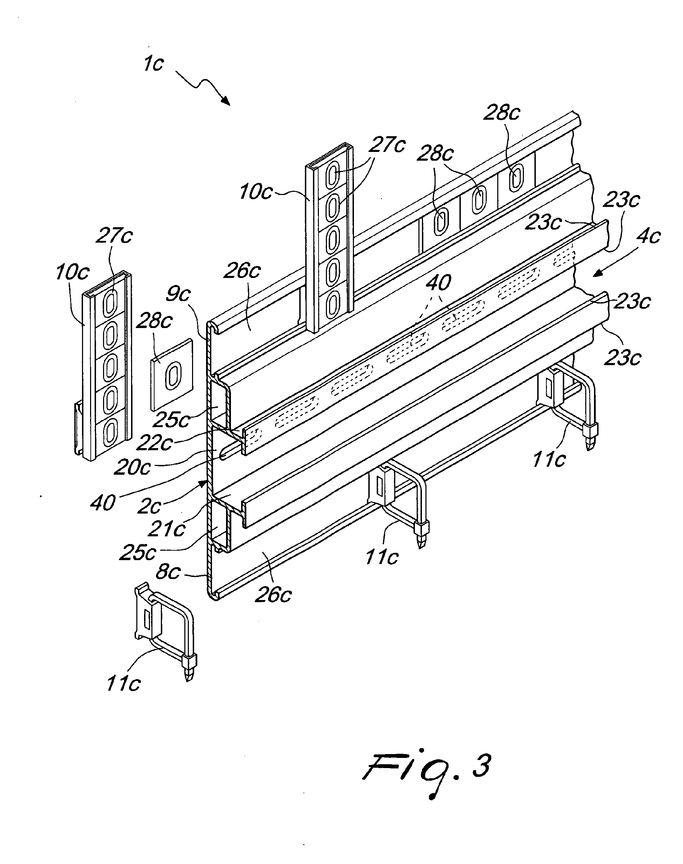

As an alternative, the coupling region 4a, 4b, 4c, 4d may have, as described in a co-pending patent application by the same Applicant, an external profile which has an Ω-shaped transverse cross-section and an internal profile which has an asymmetrical C-shaped transverse cross-section, as shown in Figures 1, 2, 4 and 5, or a symmetrical one, as shown in Figure 3, so as to be able to support equally electrical components provided with fastening portions of the type which can be engaged astride the two side walls of the coupling region of the section or of the type to be inserted between the two mutually opposite side walls of the coupling region of the section.

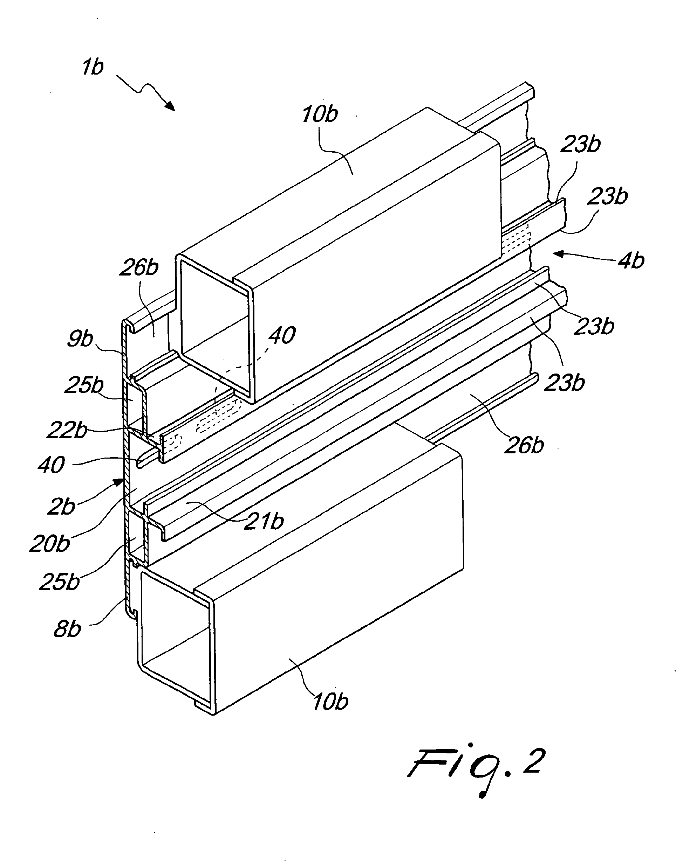

The lateral extensions can be provided monolithically with the section 2b, 2c, 2d, which forms the coupling region 4b, 4c, 4d as shown in Figures 2, 3, 4, 5, or can belong to another section 3a, which is connected longitudinally to the section 2a, which forms the coupling region 4a as shown in Figure 1.

More particularly, as shown in Figure 1, the device in its first embodiment is composed of two sections, preferably extruded sections: a first section 2a, which is preferably metallic and forms the coupling region 4a, and a second section 3a, which forms the lateral extensions 8a, 9a. Depending on the requirements, the second section 3a can be made of metal or of synthetic material.

The first section 2a has a back wall 20a provided with lateral tabs which protrude laterally with respect to the side walls 21 a, 22a. The back wall 20a is inserted, with its lateral tabs, in a longitudinally elongated main seat 24a, which preferably has a C-shaped transverse cross-section and is formed on a face of the second section 3a. In this manner, the first section 2a is retained stably by the second section 3a and the two sections 2a and 3a constitute as a whole the body of the device according to the invention.

The lateral extensions 8a, 9a formed by the second section 3a extend laterally, on mutually opposite sides, with respect to the main seat 24a.

The wiring accessories are fixed, or can be fixed, to said lateral extensions 8a, 9a. In Figure 1, the wiring accessories 10a are constituted by conduits which are designed to support and contain the electrical cables to be connected to the electrical components fastened to the first section 2a.

In the other embodiments, shown in Figures 2 to 5, the body of the device according to the invention is constituted by a single section 2b, 2c, 2d, and the lateral extensions 8b, 9b, 8c, 9c, 8d, 9d are constituted by lateral extensions of the back wall 20b, 20c, 20d of the coupling region 4b, 4c, 4d of said section 2b, 2c, 2d.

Preferably, in the embodiments shown in Figures 2 to 5, the side walls 21 b, 22b, 21c, 22c, 21 d, 22d have, on their outer faces, lateral extensions which connect to the lateral extensions 8b, 9b, 8c, 9c, 8d, 9d of the back wall 20b, 20c, 20d and form with them first receptacles or seats 25b, 25c, 25d which are open at the longitudinal ends of the section 2b, 2c, 2d.

These first seats 25b, 25c, 25d can be used to fix wiring straps for the cables to be connected to the electrical components to be supported by means of the device according to the invention.

Second seats 26b, 26c, 26d, designed to receive various wiring accessories, are formed on the side of the lateral extensions 8b, 9b, 8c, 9c, 8d, 9d from which the side walls 21 b, 22b, 21 c, 22c, 21 d, 22d protrude.

The second seats 26b, 26c, 26d protrude longitudinally along the section 2b, 2c, 2d and preferably have a substantially C-shaped transverse cross-section. Said second seats 26b, 26c, 26d are designed to receive a portion of the wiring accessories which is shaped correspondingly.

Figure 2 illustrates wiring accessories 10b, which are coupled to the second seats 26b and are constituted by conduits for containing and supporting the cables to be connected to the electrical components fastened to the coupling region 4b.

Figure 3 illustrates wiring accessories which are coupled to the second seats 26c and are constituted by supporting panels 10c for marking tags 27c of the electrical components or cables, by marking tags 28c which are inserted directly in the second seats 26c, and by straps 11c for supporting the cables to be connected to the electrical components.

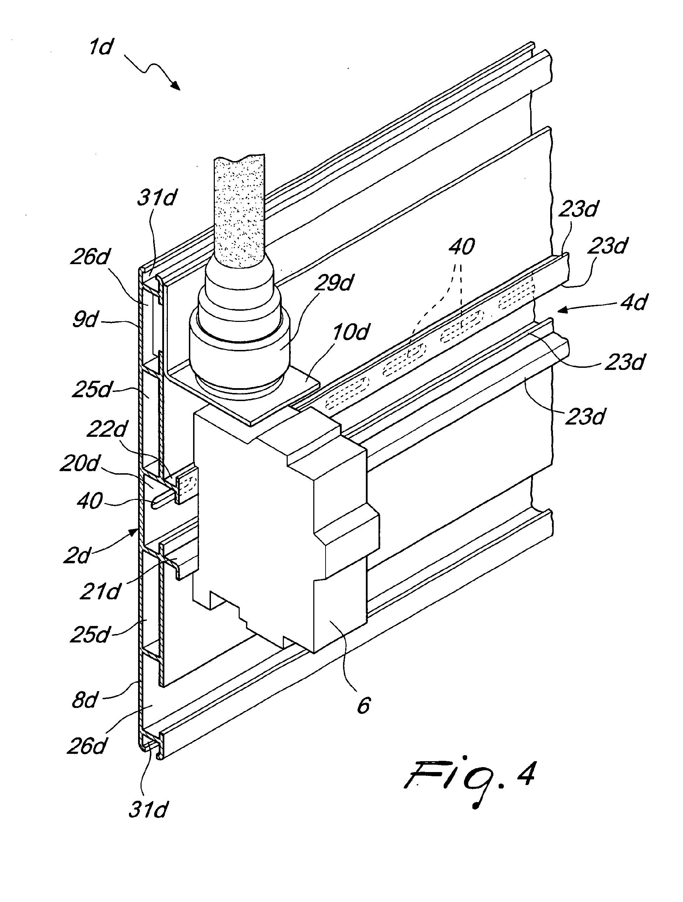

Figure 4 illustrates a wiring accessory 10d, which is coupled to a second seat 26d and is constituted by an L-shaped element for supporting an electrical connector 29d.

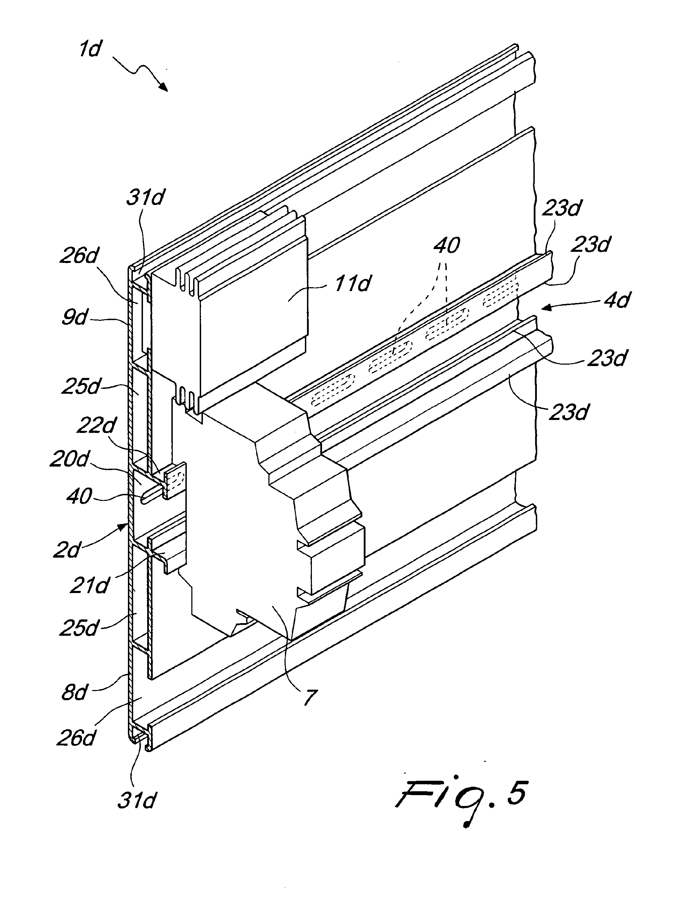

Figure 5 illustrates a wiring accessory 11 d, which is coupled to a second seat 26d and is constituted by a heat sink for diodes.

As shown in Figures 4 and 5, at the free ends of the lateral extensions 8d, 9d it is also possible to provide third seats 31d, which can be used in a manner similar to the second seats 26d in order to support wiring accessories.

It should be noted that the device according to the invention, even in its first embodiment, can be provided with second seats and/or third seats for supporting wiring accessories, and third seats might also be provided in the second and third embodiments.

In the various embodiments, holes 40 for fixing the device to a wall or supporting element in general are provided on the back wall 20a, 20b, 20c, 20d and/or on the lateral extensions 8a, 9a, 8b, 9b, 8c, 9c, 8d, 9d.

The use of the device according to the invention is evident from what has been described and illustrated. In particular, it is evident that the device according to the invention, by being provided not only with a coupling region for the electrical components but also with supporting regions which can be engaged by wiring accessories which can be used to support and organize efficiently the electrical cables to be connected to the electrical components or for other uses, simplifies considerably the wiring operations, making them easier and faster.

In particular, with the device according to the invention it is possible to produce the wiring entirely or partially on the workbench, achieving greater speed and ease and higher precision in the wiring, limiting on-site execution to the fixing of the device to a supporting element.

In the examples of embodiments described above, individual characteristics, given in relation to specific examples, may actually be interchanged with other different characteristics that exist in other examples of embodiments.

In practice it has been found that the device according to the invention fully achieves the intended aim, since it facilitates significantly the wiring operations, making them faster and simpler to perform, and optionally allows to perform wiring operations on a workbench, with considerable savings for performing the wiring.

The device thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

The disclosures in Italian Patent Application No. MI2005A000709 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for supporting electrical components and wiring accessories, comprising a body, composed of at least one longitudinally elongated section (2a, 3a, 2b, 2c, 2d), which can be fixed to a supporting element and forms a coupling region (4a, 4b, 4c, 4d) for electrical components (5, 6, 7), **characterized in that** said body is provided with at least one lateral extension (8a, 9a, 8b, 9b, 8c, 9c, 8d, 9d), which protrudes laterally with respect to said coupling region (4a, 4b, 4c, 4d) and is adapted to support wiring accessories (10a, 10b, 10c, 11a, 11b, 11c).

2. The device according to claim 1, **characterized in that** said body has two lateral extensions (8a, 9a, 8b, 9b, 8c, 9c, 8d, 9d), which protrude on mutually opposite sides with respect to said coupling region (4a, 4b, 4c, 4d).

3. The device according to claims 1 and 2, **characterized in that** said lateral extensions (8a, 9a, 8b, 9b, 8c, 9c, 8d, 9d) are symmetrical with respect to a longitudinal central plane of said at least one section (3a, 2b, 2c, 2d).

4. The device according to one or more of the preceding claims, **characterized in that** said coupling region is formed by a back wall (20a, 20b, 20c, 20d), by two side walls (21 a, 22a, 21b, 22b, 21c, 22c, 21 d, 22d) which protrude from a face of said back wall (20a, 20b, 20c, 20d) and face each other, and by wings (23a, 23b, 23c, 23d) which protrude from said side walls and can be engaged by the electrical components (5, 6, 7) to be supported; said back wall, said side walls and said wings being part of a same section.

5. The device according to one or more of the preceding claims, **characterized in that** said body comprises a single section (2b, 2c, 2d), which forms said coupling region (4b, 4c, 4d) and said lateral extensions (8b, 9b, 8c, 9c, 8d, 9d), said lateral extensions constituting lateral extensions of said back wall.

6. The device according to claim 5, **characterized in that** said side walls (21b, 22b, 21c, 22c, 21 d, 22d) have, on their outer faces, lateral extensions which connect to said lateral extensions (8b, 9b, 8c, 9c, 8d, 9d) and form with them first seats (25b, 25c, 25d) which are open at the longitudinal ends of said section (2b, 2c, 2d).

7. The device according to claim 5, **characterized in that** second seats (26b, 26c, 26d) are formed in said lateral extensions (8b, 9b, 8c, 9c) and are open on the side of said back wall, said side walls (21 b, 22b, 21 c, 22c, 21 d, 22d) protruding from said side and being adapted to support said wiring accessories.

8. The device according to one or more of the preceding claims, **characterized in that** said body comprises a first section (2a), which forms said coupling region (4a), and a second section (3a), which is connected longitudinally to said first section (2a) and forms said at least one lateral extension (8a, 9a).

9. The device according to one or more of the preceding claims, **characterized in that** said second section (3a) has a main seat (24a), which accommodates a portion of said first section (2a) which forms said coupling region proximate to said back wall (20a), said lateral extensions (8a, 9a) protruding laterally, on mutually opposite sides, with respect to said main seat (24a).

10. The device according to one or more of the preceding claims, **characterized in that** second seats, adapted to support said wiring accessories (10a), are formed on the side of said second section (3a) which supports said first section (2a), on said lateral extensions (8a, 9a).

11. The device according to one or more of the preceding claims, **characterized in that** third seats (26d), adapted to support wiring accessories, are formed at the free ends of said lateral extensions (8d, 9d).

12. The device according to one or more of the preceding claims, **characterized in that** said second seats (26c) are adapted to support straps (11c) for supporting the cables to be connected to said electrical components and/or conduits for containing the cables to be connected to said electrical components and/or marking tags (28c) and/or panels (10c) for supporting marking tags (27c) and/or L-shaped supports for connectors (29d) to be connected to said electrical components.

13. The device according to one or more of the preceding claims, **characterized in that** conduits for containing the cables to be connected to said electrical components are connected to said lateral extensions (8a, 9a, 8b, 9b, 8c, 9c, 8d, 9d).

14. The device according to one or more of the preceding claims, **characterized in that** said at least one section (2a, 3a) is constituted by an extruded section.

15. The device according to one or more of the preceding claims, **characterized in that** said first section (2a) and said second section (3a) are constituted by extruded sections.
